# EUROPÄISCHE PATENTSCHRIFT

(11) **EP 1 734 381 B1**
(45) Veröffentlichungstag und Bekanntmachung des Hinweises auf die Patenterteilung: **17.09.2008**
(21) Anmeldenummer: 06118992.4
(22) Anmeldetag: 17.03.1998
(51) Int. Cl.: B60R 11/00, B60R 19/48, B60Q 1/04

(54) **Anordnung mit einem Modul zum Einbau in einen Stoßfänger eines Kraftfahrzeugs**
Modular device to be inserted into a vehicle bumper
Dispositif à module à insérer dans un pare-chocs de véhicule

(30) Priorität: 09.05.1997 DE 19719519
(43) Veröffentlichungstag der Anmeldung: 20.12.2006
(62) Teilanmeldung aus: 98925403.2
(73) Patentinhaber: ROBERT BOSCH GMBH, 70442 Stuttgart (DE)
(72) Erfinder: Karr, Dieter, 75233 Tiefenbronn (DE); Fehse, Meike, 71229 Leonberg (DE); Noll, Martin, 76461 Muggensturm (DE); Rapps, Peter, 76227 Karlsruhe (DE); Ernst, Waldemar, 71665 Vaihingen/Enz (DE)

(56) Entgegenhaltungen:
- EP-A- 0 466 034
- WO-A-97/26155
- DE-A- 19 528 474
- GB-A- 2 287 917
- US-A- 3 794 997

## Beschreibung

### Stand der Technik

Die Erfindung geht aus von einer Anordnung mit einem Modul zum Einbau in einen Stoßfänger eines Kraftfahrzeugs nach der Gattung des Hauptanspruchs. Es ist schon bekannt, Module, die beispielsweise als Ultraschallsensor zur Abstandsmessung ausgebildet sind, in einen Stoßfänger einzubauen. Dabei wird das Gehäuse des Moduls in eine entsprechende Bohrung des Stoßfängers gesteckt und befestigt. Zur Beeinflussung des Detektionsbereiches wird dann noch eine Blende aufgesetzt, die den Ultraschallsensor teilweise abdeckt. Eine derartige Anordnung ist beispielsweise aus der DE 3939387 A1 bekannt. Diese Anordnung ist aus Designgründen nicht unbedingt erwünscht, da Teile des Moduls gegenüber der Stoßstange erhaben ausgebildet sind und dadurch das Erscheinungsbild stören. Auch ist ein derartiger Sensor relativ auffällig, so daß er insbesondere von spielenden Kindern leicht beschädigt werden kann.

Das Dokument EP-A- 466 034 offenbart eine Anordnung gemäß dem Oberbegriff des Anspruchs 1.

### Vorteile der Erfindung

Die erfindungsgemäße Anordnung des Moduls mit den kennzeichnenden Merkmalen des Hauptanspruchs hat demgegenüber den Vorteil, daß das Modul zur Oberfläche des Stoßfängers bündig eingebaut ist und somit kaum auffällt. Eine derartige Anordnung beeinträchtigt praktisch nicht das Design des Fahrzeugs, da nur ein kleiner Kopfteil des Moduls sichtbar ist. Das Halteteil des Moduls ist hinter der Stoßstange befestigt und ist daher von außen nicht sichtbar.

Durch die in abhängigen Ansprüchen angegebenen Maßnahmen des im Hauptanspruch angegebenen Moduls sind vorteilhafte Weiterbildungen und Verbesserungen gegeben.

Das Halteteil ist durch Kleben, Anspritzen oder Schweißen fest mit dem Stoßfänger zu verbinden, damit es fixiert ist. Das Modul wird dann in das Halteteil eingeführt und durch eine Klipsvorrichtung mit dem Halteteil befestigt, so daß das Modul einerseits fixiert ist, andererseits im Reparaturfall vom Halteteil lösbar ist.

Um das Modul möglichst unauffällig erscheinen zu lassen, wird sein Kopfteil vorteilhaft in eine Bohrung des Stoßfängers eingeführt und bündig mit einer benachbarten Außenfläche des Stoßfängers ausgerichtet. Vorteilhaft ist, wenn nur noch ein kleiner Spalt zu sehen ist. Ist als Modul ein Ultraschallsensor zur Abstandsmessung vorgesehen, dann dient vorteilhaft der Spalt zur akustischen Entkoppelung zum Stoßfänger.

Günstig ist weiterhin, das Modul in der Farbe des Stoßfängers auszubilden, damit das Modul möglichst unauffällig wirkt.

Durch den Einbau des Moduls von der Rückseite des Stoßfängers her, wird auch ein unerwünschter Ausbau des Moduls erheblich erschwert.

### Zeichnung

Ein Ausführungsbeispiel der Erfindung ist in der Zeichnung dargestellt und in der nachfolgenden Beschreibung näher erläutert. Es zeigen Figur 1 eine bekannte Ausführungsform eines Ultraschallsensors in einem Stoßfänger, Figur 2 zeigt ein erfindungsgemäßes Ausführungsbeispiel, Figur 3 zeigt in Explosionsdarstellung das Ausführungsbeispiel und Figur 4 zeigt den Endzustand nach der Montage der Anordnung.

### Beschreibung des Ausführungsbeispiels

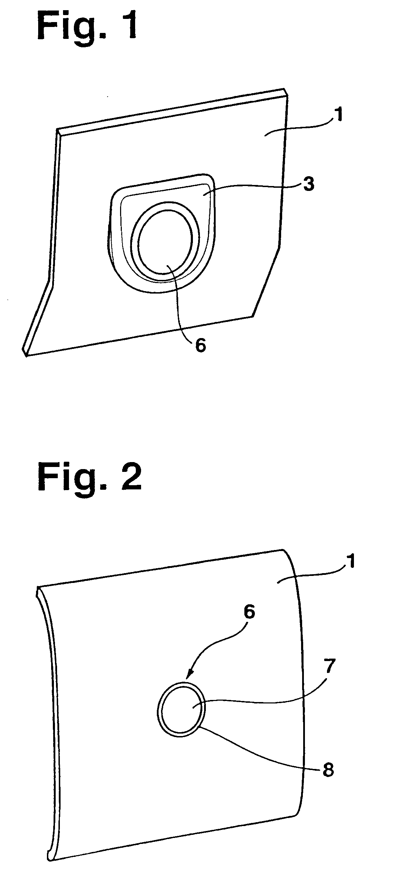

Figur 1 zeigt eine bekannte Anordnung eines Moduls 6, das als Ultraschallsensor ausgebildet und in einem Stoßfänger 1 eingebaut ist. Zur Befestigung des Moduls 6 ist ein Halteteil von außen durch eine von außen nicht sichtbare Öffnung im Stoßfänger 1 eingebracht, die gleichzeitig das Modul 6 aufnimmt. Bei dieser Anordnung ist sowohl das Modul 6 als auch das Halteteil 3 sichtbar. Eine derartige Anordnung wird aus Designgründen als störend empfunden und ist daher in der Regel unerwünscht.

Figur 2 zeigt die Anordnung eines erfindungsgemäßen Ausführungsbeispiels, bei dem das Modul 6 von hinten in den Stoßfänger 1 eingeführt wurde, so daß nur noch der Kopfteil 7 von außen sichtbar ist. Insbesondere wenn das Modul 6 oder nur der Kopfteil 7 in der Farbe des Stoßfängers 1 lackiert oder ausgebildet wurde, erscheint diese Anordnung sehr unscheinbar und unauffällig, auch wenn noch ein Spalt 8 sichtbar ist.

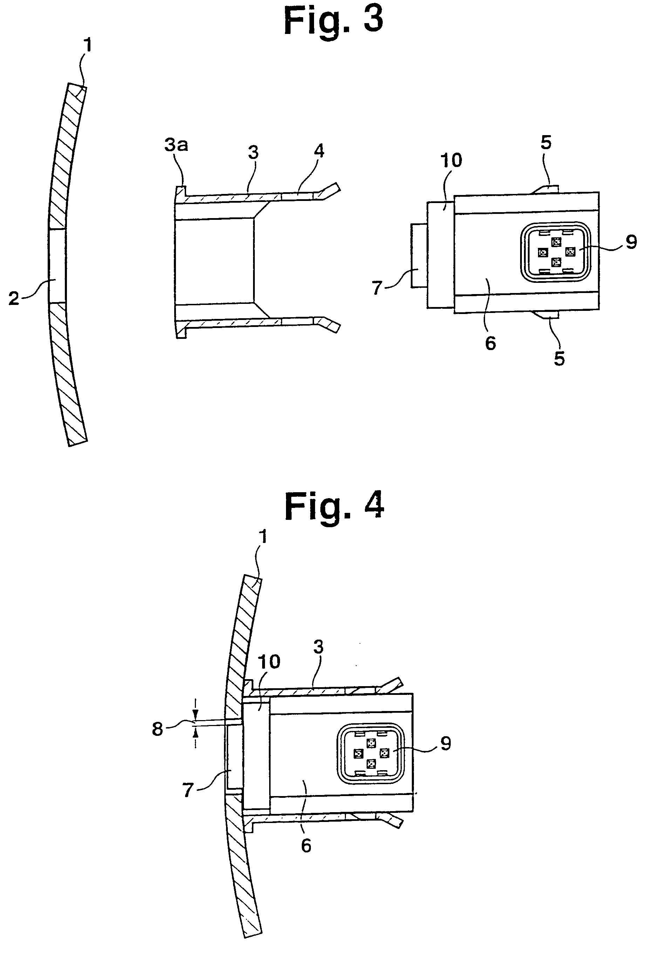

Figur 3 zeigt in Explosionsdarstellung die erfindungsgemäße Anordnung des Ausführungsbeispiels mit dem Einbau des Moduls 6 am Stoßfänger 1 eines nicht dargestellten Kraftfahrzeugs.

Das Halteteil 3 ist rohrförmig ausgebildet und hat eine als Kragen 3a ausgebildete Stirnsteite. An dieser Stirnseite 3a wird das Halteteil 3 axial zu einer geeigneten Bohrung 2 in der Stoßstange 1 von der Rückseite des Stoßfängers 1 her befestigt. Zur Befestigung können die üblichen Verbindungstechniken wie Kleben, Schweißen, Anspritzen oder Schrauben verwendet werden. Nach der Befestigung des Halteteils 3 am Stoßfänger 1 wird das Modul 6 von hinten her soweit in das Halteteil 3 eingeschoben, bis das Kopfteil 7 mit seiner Stirnfläche etwa bündig mit der benachbarten Außenfläche des Stoßfängers 1 liegt. Das Kopfteil 7 ist im Durchmesser etwas kleiner bemessen, so daß es in die Bohrung 2 des Stoßfängers 1 paßt. Bei Ausbildung des Moduls 6 als Ultraschallsensor wird vorzugsweise der Durchmesser der Bohrung 2 so bemessen, daß ein kleiner Spalt 8 zwischen dem Kopfteil 7 und der Wandung des Stoßfängers 1 verbleibt, so daß eine akustische Entkoppelung zwischen der Schwingmembran (Kopfteil 7) und dem Stoßfänger 1 erreicht wird. Das Modul 6 wird vorzugsweise über einen elastischen Haltering 10, der im Bereich des Kopfteils 7 angebracht ist, im Halteteil 3 fixiert und vorzugsweise mittels einer Klipsvorrichtung 4,5 gegen ein
axiales Verschieben gesichert. Die Klipsvorrichtung 4 ist am Halteteil 3 elastisch ausgebildet, so daß durch Abheben die Klipsvorrichtung 4,5 das Modul 6 entriegelt und herausnehmbar ist. Über ein Anschlußteil 9 ist das Modul 6 mit einer Steuervorrichtung elektrisch verbindbar.

Figur 4 zeigt die erfindungsgemäße Anordnung nach der Montage an dem Stoßfänger 1. Das Modul ist vorzugsweise rotationssymetrisch ausgebildet, so daß es auch um 180 °C verdreht an dem Stoßfänger 1 befestigt werden kann. Das Kopfteil ist in etwa bündig mit der Außenseite des Stoßfängers 1 angeordnet, so daß das Kopfteil 7 auf den ersten Blick insbesondere dann, wenn es in der Farbe des Stoßfängers 1 lackiert ist, nicht erkennbar ist.

## Patentansprüche

1. Anordnung mit einem Stoßfänger eines Kraftfahrzeugs, einem Modul zum Einbau in den Stoßfänger und mit einem Halteteil zur Befestigung des Moduls an dem Stoßfänger, wobei das Halteteil (3) auf der Innenseite des Stoßfängers (1) angebracht ist und wobei das Halteteil (3) zur Aufnahme des Moduls (6) derart ausgebildet ist, dass ein Kopfteil (7) des Moduls (6) nach der Montage etwa bündig zu einer benachbarten Außenfläche des Stoßfängers (1) angeordnet ist, **dadurch gekennzeichnet, dass** das Modul (6) derart ausgebildet ist, dass es von der Innenseite des Stoßfängers (1) in das Halteteil (3) einführbar ist, dass das Halteteil (3) durch Kleben, Anspritzen, Schweißen oder Schrauben fest mit dem Stoßfänger (1) verbunden ist und dass das Halteteil (1) des Moduls (6) so an der Innenseite des Stoßfängers (1) befestigt ist, dass es von außen nicht sichtbar ist.

2. Anordnung nach Anspruch 1, **dadurch gekennzeichnet, dass** das Halteteil (3) eine Klipsvorrichtung (4,5) zur lösbaren Befestigung des Moduls (6) aufweist.

3. Anordnung nach einem der vorgehenden Ansprüche, **dadurch gekennzeichnet, dass** das Kopfteil (7) des Moduls (6) in eine Bohrung (2) des Stoßfängers (1) einführbar ist.

4. Anordnung nach Anspruch 3, **dadurch gekennzeichnet, dass** die Bohrung (2) mit dem Kopfteil (7) einen Spalt (8) mit einer vorgegebenen Breite (8) bildet.

5. Anordnung nach einem der vorhergehenden Ansprüche, **dadurch gekennzeichnet, dass** das Modul (6) ein Ultraschallsensor zur Abstandsmessung ist.

6. Anordnung nach einem der vorhergehenden Ansprüche, **dadurch gekennzeichnet, dass** das Modul (6) wenigstens teilweise in der Farbe des Stoßfängers (1) ausgebildet ist.

7. Anordnung nach einem der vorhergehenden Ansprüche, **dadurch gekennzeichnet, dass** das Modul (6) derart ausgebildet ist, das es nur von der Innenseite des Stoßfängers (1) in das Halteteil (3) einführbar ist.

## Claims

1. Arrangement with a bumper of a motor vehicle, a module for inserting into the bumper and with a retaining part for fixing the module to the bumper, the retaining part (3) being fitted on the inside of the bumper (1), and, for receiving the module (6), the retaining part (3) being designed in such a manner that, after installation, a head part (7) of the module (6) is arranged approximately flush to an adjacent outer surface of the bumper (1), **characterized in that** the module (6) is designed in such a manner that it can be introduced into the retaining part (3) from the inside of the bumper (1), **in that** the retaining part (3) is connected fixedly to the bumper (1) by adhesive bonding, injection moulding, welding or screwing, and **in that** the retaining part (3) of the module (6) is fixed on the inside of the bumper (1) in such a way that it is not visible from the outside.

2. Arrangement according to Claim 1, **characterized in that** the retaining part (3) has a clip device (4, 5) for the releasable fixing of the module (6).

3. Arrangement according to one of the preceding claims, **characterized in that** the head part (7) of the module (6) can be introduced into a hole (2) of the bumper (1).

4. Arrangement according to Claim 3, **characterized in that** the hole (2) forms a gap (8) with a predetermined width (8) with the head part (7).

5. Arrangement according to one of the preceding claims, **characterized in that** the module (6) is an ultrasound sensor for measuring distance.

6. Arrangement according to one of the preceding claims, **characterized in that** the module (6) is at least partially formed in the colour of the bumper (1).

7. Arrangement according to one of the preceding claims, **characterized in that** the module (6) is designed in such a manner that it can only be introduced into the retaining part (3) from the inside of the bumper (1).

## Revendications

1. Dispositif comportant un module insérable dans un pare-chocs de véhicule automobile pour être monté dans le pare-chocs et il comporte une pièce d'arrêt pour fixer le module au pare-chocs,
la pièce d'arrêt (3) étant installée à partir du côté intérieur du pare-chocs (1) et
la pièce d'arrêt (3) est réalisée pour recevoir le module (6) de façon que la tête (7) du module (6), après montage, soit sensiblement à fleur avec la surface extérieure voisine du pare-chocs (1),
**caractérisé en ce que**
le module (6) est réalisé pour qu'il puisse s'introduire par le côté intérieur du pare-chocs (1) dans la pièce d'arrêt (3),
la pièce d'arrêt (3) est reliée solidairement au pare-chocs (1) par collage, pulvérisation, soudage ou vissage et
la pièce d'arrêt (3) du module (6) est fixée au côté intérieur du pare-chocs (1) pour ne pas être visible de l'extérieur.

2. Dispositif selon la revendication 1,
**caractérisé en ce que**
la pièce d'arrêt (3) comporte un dispositif d'enclipsage (4, 5) pour la fixation amovible du module (6).

3. Dispositif selon l'une des revendications précédentes,
**caractérisé en ce que**
la tête (7) du module (6) s'introduit dans un perçage (2) du pare-chocs (1).

4. Dispositif selon la revendication 3,
**caractérisé en ce que**
le perçage (2) forme un intervalle (8) de largeur prédéfinie (8) avec la tête (7).

5. Dispositif selon l'une des revendications précédentes,
**caractérisé en ce que**
le module (6) est un capteur à ultrasons pour mesurer une distance.

6. Dispositif selon l'une des revendications précédentes,
**caractérisé en ce que**
le module (6) est au moins en partie réalisé dans la même couleur que le pare-chocs (1).

7. Dispositif selon l'une des revendications précédentes,
**caractérisé en ce que**
le module (6) est réalisé pour qu'il ne puisse être introduit dans la pièce d'arrêt (3) que par la partie intérieure du pare-chocs (1).
